# EUROPEAN PATENT SPECIFICATION

(11) **EP 2 251 565 B1**
(45) Date of publication and mention of the grant of the patent: **09.05.2012**
(21) Application number: 10162611.7
(22) Date of filing: 12.05.2010
(51) Int. Cl.: F16H 7/08

(54) **Chain tensioner**
Kettenspanner
Tendeur de chaîne

(30) Priority: 14.05.2009 JP 2009117344
(43) Date of publication of application: 17.11.2010
(73) Proprietor: NTN Corporation, Osaka-shi, Osaka (JP)
(72) Inventor: Sato, Seiji c/o NTN Corporation, Iwata-shi Shizuoka (JP); Onimaru, Kouichi c/o NTN Corporation, Iwata-shi Shizuoka (JP); Hayakawa, Hisashi c/o NTN Corporation, Iwata-shi Shizuoka (JP)
(74) Representative: Grünecker, Kinkeldey, Stockmair & Schwanhäusser

(56) References cited:
- EP-A2- 0 916 869
- EP-A2- 1 498 638
- DE-A1- 19 929 668
- JP-A- 2006 153 118
- US-A1- 2009 111 628

## Description

### BACKGROUND OF THE INVENTION

This invention relates to a chain tensioner used to keep the tension of a timing chain for driving vehicle engine camshafts as indicated in the preamble of claim 1 which is known from EP 0 916 869 A2.

In a typical vehicle engine, the rotation of its crankshaft is transmitted to camshafts through a timing chain, thereby rotating the camshafts and opening and closing valves of combustion chambers. In order to keep the tension of the chain within a proper range, a tension adjusting assembly is often used which includes a chain guide pivotable about a pivot shaft, and a chain tensioner for pressing the chain through the chain guide.

One know chain tensioner of this type is disclosed in JP Patent Publication 2006-153118A, which comprises a cylindrical cylinder having open and closed ends and inserted in and fixed in position in a tensioner mounting hole formed in a engine cover with its open end disposed inside the engine cover, a plunger axially slidably mounted in the cylinder, and a return spring biasing the plunger in the direction to protrude from the cylinder. An oil supply passage is formed in the cylinder through which engine oil can be supplied from an oil hole open to the inner periphery of the tensioner mounting hole into a pressure chamber defined by the cylinder and the plunger. A check valve is provided at the end of the oil supply passage on the side of the pressure chamber which permits only the flow of engine oil from the oil supply passage into the pressure chamber.

With this chain tensioner, when the tension of the chain increases while the engine is running, the plunger is pushed into the cylinder under the tension of the chain, thereby absorbing tension of the chain. At this time, engine oil in the pressure chamber leaks through a leakage gap defined between sliding surfaces of the plunger and the cylinder. Thus, the plunger moves slowly due to the damper action produced by the viscous resistance of the engine oil.

When the tension of the chain decreases while the engine is running, the plunger protrudes from the cylinder under the biasing force of the return spring, thus removing slackness of the chain. At this time, the check valve opens, and the engine oil flows into the pressure chamber from the oil supply passage. Thus, the plunger moves quickly.

In order to mount this chain tensioner to the engine cover, the cylinder is inserted into the tensioner mounting hole formed in the engine cover and a flange formed on the outer periphery of the cylinder is fixed to the outer surface of the engine cover by means of a plurality of bolts.

In mounting the chain tensioner, it is troublesome to prepare such a plurality of bolts and is equally troublesome to tighten the bolts individually.

The inventors of the present invention therefore tried to develop a chain tensioner which can be more easily mounted to the engine cover, and proposed a chain tensioner in which an external thread is formed on the outer periphery of the cylinder which is brought into threaded engagement with an internal thread formed on the inner periphery of the tensioner mounting hole.

With this chain tensioner, since an external thread used to mount the chain tensioner to the engine cover is directly formed on the outer periphery of the cylinder, no bolts are necessary to mount the chain tensioner to the engine cover, which makes mounting of the chain tensioner to the engine cover easier. But since the external thread on the outer periphery of the cylinder has a large outer diameter, it is difficult to form such an external thread using a thread-cutting die. Instead, such an external thread has to be formed by a lathe, which pushes up the machining cost.

An object of the present invention is to provide a chain tensioner which can be easily mounted to an engine cover and which is inexpensive.

### SUMMARY OF THE INVENTION

In In order to achieve this object, a chain tensioner is provided having the features of claim 1. With this arrangement, the external thread can be formed at a much lower cost than when forming the external thread by using a thread-cutting die or a lathe. Since the external thread is formed by casting, it has a cast surface.

By means of the two chamfers, by carrying out aluminum die casting with the abutment surfaces located on the two chamfers, it is possible to prevent deterioration in quality of the external thread due to burrs produced during casting. In this case, by setting the distance between the two chamfers smaller than the root diameter of the external thread, it is possible to more reliably prevent production of burrs due to casting on the external thread.

If a cylindrical surface is formed on the outer periphery of the cylinder so as to be fitted in a cylindrical surface formed on the inner periphery of the tensioner mounting hole with a gap left therebetween such that this cylindrical surface is located nearer to the open end of the cylinder than is the external thread, this cylindrical surface preferably also comprises a cast surface to reduce the machining cost of the cylinder.

In order to minimize the consumption of engine oil, the gap between the cylindrical surface on the inner periphery of the tensioner mounting hole and the cylindrical surface on the outer periphery of the cylinder should be as small as possible. But in this case, if the cylindrical surface on the outer periphery of the cylinder is a cast surface, since such a cast surface cannot be formed with high precision, the cylinder may interfere with the inner periphery of the tensioner mounting hole, thereby making it impossible to mount the tensioner to the engine cover.

Thus preferably, a seal member is provided for sealing the gap between the cylindrical surface on the inner periphery of the tensioner mounting hole and the cylindrical surface on the outer periphery of the cylinder at a position nearer to the open end of the cylinder than is the oil supply passage. With this arrangement, it is possible to increase the gap between the cylindrical surface on the inner periphery of the tensioner mounting hole and the cylindrical surface on the outer periphery of the cylinder, thereby preventing interference of the cylinder with the inner periphery of the tensioner mounting hole.

The seal member may be an O-ring fitted in a ring groove formed in the cylindrical surface on the outer periphery of the cylinder. Alternatively, the seal member may be a seal ring having circumferentially separable abutments and fitted in a ring groove formed in the cylindrical surface on the outer periphery of the cylinder. This seal ring may be made of a fluororesin.

The cylinder may be an aluminum die cast product.

With the chain tensioner according to this invention, since the external thread used to mount the tensioner to the engine cover is directly formed on the outer periphery of the cylinder, no bolts are necessary to mount the tensioner to the engine cover. Thus, the tensioner can be easily mounted to the engine cover. Also, since the external thread on the outer periphery of the cylinder is formed by casting, it can be formed at a low cost.

### BRIEF DESCRIPTION OF THE DRAWINGS

Fig. 1 is a front view of a chain transmission assembly including a chain tensioner embodying the present invention;
Fig. 2 is an enlarged sectional view of around the chain tensioner of Fig. 1;
Fig. 3 is a partial sectional view of Fig. 2, showing the cylinder.
Fig. 4 is a sectional view taken along line IV-IV of Fig. 3; and
Fig. 5 is a partial sectional view of a chain tensioner in which the O-ring shown in Fig. 3 is replaced by a seal ring.

### DETAILED DESCRIPTION OF THE PREFERRED EMBODIMENTS

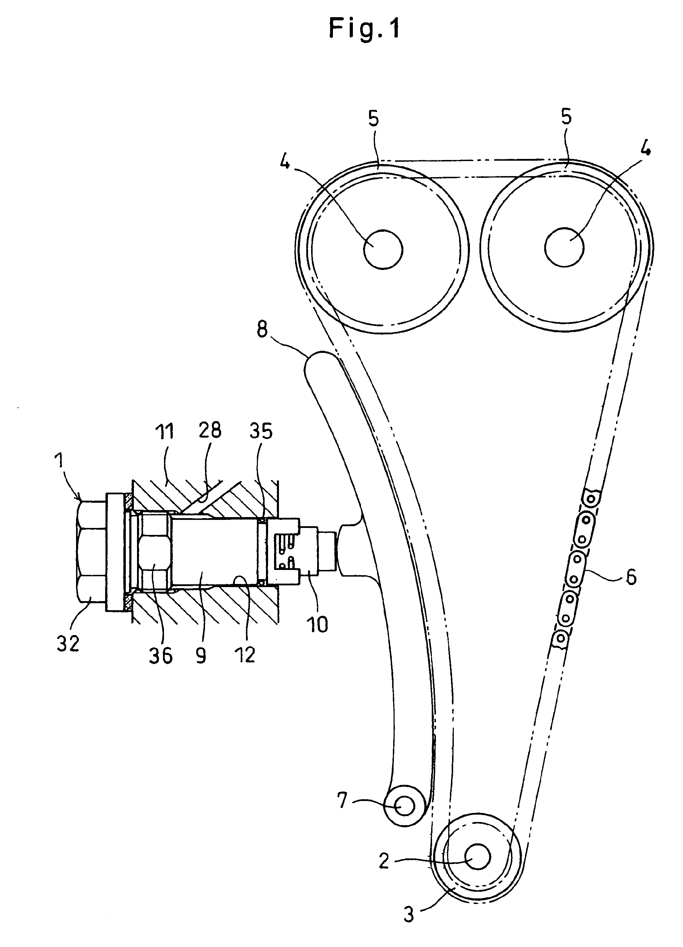

Fig. 1 shows a chain transmission assembly including the chain tensioner 1 embodying the present invention. The chain transmission assembly includes a sprocket 3 fixed to an engine crankshaft 2, sprockets 5 fixed to camshafts 4, and a chain 6 trained around the sprockets 3 and 5 for transmitting the rotation of crankshaft 2 to the camshafts 4, thereby rotating the camshafts 4 and opening and closing valves (not shown) of combustion chambers (not shown, either).

A chain guide 8 pivotally supported on a pivot shaft 7 is kept in contact with the chain 6. The chain tensioner 1 presses the chain 6 through the chain guide 8.

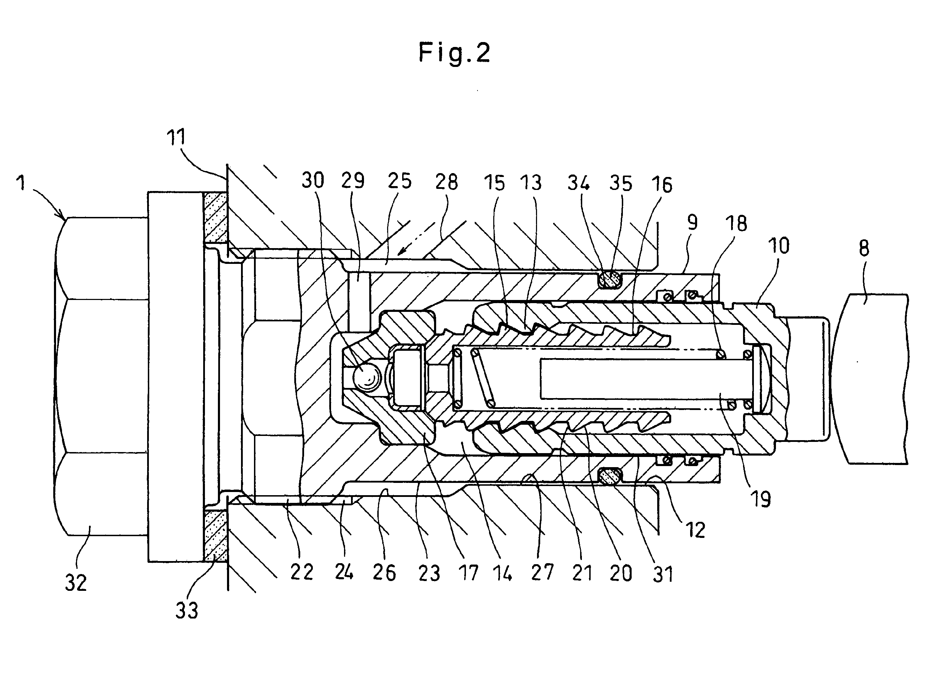

As shown in Fig. 2, the chain tensioner 1 includes a cylindrical cylinder 9 having open and closed ends, and a plunger 10 axially slidably inserted in the cylinder 9. The cylinder 9 is inserted in a tensioner mounting hole 12 formed in an engine cover 11 and fixed in position with its open end located inside the engine cover 11.

The plunger 10 is a cylindrical member having a bottom and having its open end located inside the cylinder 9. An internal thread 13 is formed on the inner periphery of the plunger 10. A screw rod 16 having an external thread 15 on its outer periphery is mounted in a pressure chamber 14 defined by the cylinder 9 and the plunger 10, with the external thread 15 in threaded engagement with the internal thread 13. The screw rod 16 has one end thereof protruding from the plunger 10 and in abutment with a rod seat 17 press-fitted and fixed in position in the cylinder 9.

A return spring 18 is mounted between the plunger 10 and the screw rod 16 with one end thereof supported on the screw rod 16 and the other end pressed against the plunger 10 through a spring seat 19, thereby biasing the plunger 10 in the direction to protrude from the cylinder 9. The chain guide 8 is thus pressed by the protruding end of the plunger 10.

The external thread 15 and the internal thread 13 each have a pressure flank 20 for receiving pressure when a load is applied that tends to push the plunger 10 into the cylinder 9. The pressure flank 20 has a larger flank angle than a clearance flank 21. Thus, the threads 15 and 13 have a serration-shaped section.

The cylinder 9 has an external thread 22 and a cylindrical surface 23 on its outer periphery at its portion located inside the tensioner mounting hole 12. The cylindrical surface 23 is located nearer to the open end of the cylinder 9 than is the external thread 22, and has a diameter smaller than the outer diameter of the external thread 22.

On the inner periphery of the tensioner mounting surface 12, there are formed, from the outer surface of the engine cover 11 toward its inner surface, an internal thread 24 kept in threaded engagement with the external thread 22 on the outer periphery of the cylinder 9, a recess 26 defining an annular oil sump 25 between itself and the cylindrical surface 23 on the outer periphery of the cylinder 9, and a cylindrical surface 27 fitted around the cylindrical surface 23 on the outer periphery of the cylinder 9 with a gap left therebetween. An oil hole 28 formed in the engine cover 11 has one end thereof open to the recess 26.

An oil supply passage 29 is formed in the cylinder 9 for introducing engine oil into the pressure chamber 14, which is defined by the cylinder 9 and the plunger 10. The oil supply passage 29 extends radially through the cylinder with its radially outer end communicating with the oil sump 25 and its radially inner end communicating with the pressure chamber 14. Thus, engine oil supplied from an oil pump (not shown) through the oil hole 28 in the engine cover 11 is fed through the oil sump 25 and the oil supply passage 29 into the pressure chamber 14. At the end of the oil supply passage 29 on the side of the pressure chamber 14, a check valve 30 is provided which allow only the flow of engine oil from the oil supply passage 29 into the pressure chamber 14.

A minute leakage gap 31 is defined between the sliding surfaces of the plunger 10 and the cylinder 9 through which engine oil in the pressure chamber 14 can leak out.

A hexagonal head 32 for engaging a spanner is provided on the closed end of the cylinder 9. By engaging a spanner (not shown) on the hexagonal head 32, the external thread 22 can be tightened. A gasket 33 is sandwiched between the hexagonal head 32 and the engine cover 11 for sealing between the hexagonal head 32 and the engine cover 11, thereby preventing engine oil from leaking out through any gap between the cylinder 9 and the tensioner mounting hole 12.

An O-ring 35 made of rubber is fitted in a ring groove 34 formed in the cylindrical surface 23 on the outer periphery of the cylinder 9 to seal the gap between the cylindrical surface 27 on the inner periphery of the tensioner mounting hole 12 and the cylindrical surface 23 on the outer periphery of the cylinder 9 at a position nearer to the open end of the cylinder 9 than is the oil supply passage 29.

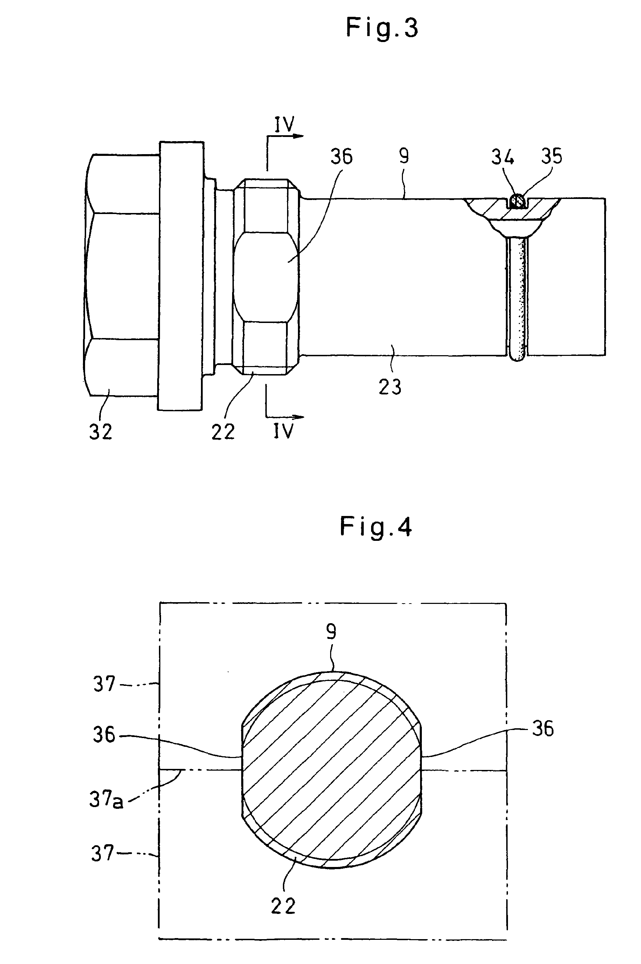

As shown in Figs. 3 and 4, two chamfers 36 are formed on the outer periphery of the cylinder 9 that circumferentially split the external thread 22. The chamfers 36 are flat surfaces extending parallel to a plane containing the axis of the cylinder 9. The distance between the two chamfers 36 are smaller than the root diameter of the external thread 22.

The cylinder 9 is an aluminum die cast product formed by aluminum die casting, i.e. by pouring molten aluminum into a die. The external thread 22, the two chamfers 36 and the cylindrical surface 23 are formed simultaneously when forming the cylinder 9 is formed by aluminum die casting. Thus, the surface of the external thread 22, the surface of the chamfers 36 and the cylindrical surface 23 are all cast surfaces. As shown by chain lines in Fig. 4, aluminum die casting is carried out with the abutment surfaces 37a of dies 37 located on the two chamfers 36.

The operation of the chain tensioner 1 is now described.

When the tension of the chain 6 decreases while the engine is running, the plunger 10 protrudes from the cylinder 9 under the biasing force of the return spring 18, thus removing slackness of the chain 6. At this time, the check valve 30 opens, and the engine oil flows into the pressure chamber 14 from the oil supply passage 29. Thus, the plunger 10 moves quickly.

When the tension of the chain increases while the engine is running, the plunger 10 is pushed into the cylinder 9 under the tension of the chain 6, thereby absorbing the tension of the chain 6. At this time, the screw rod 16 gradually rotates relative to the plunger, while repeatedly moving back and forth within the range of the axial gap between the external thread 15 and the internal thread 13 due to vibration of the chain 6. Simultaneously, engine oil in the pressure chamber 14 leaks through the leakage gap 31 between the sliding surfaces of the plunger 10 and the cylinder 9. Thus, the plunger 10 moves slowly due to the damper action produced by the viscous resistance of the engine oil.

When the engine stops, according to the stop position of the camshafts 4, the tension of the chain 6 may be kept high. But in this case, since the chain 6 does not vibrate, due to contact between the pressure flanks 20 of the external thread 15 and the internal thread 13, the plunger 10 is supported by the screw rod 16 and cannot be pushed into the cylinder 9. This minimizes slackening of the chain when the engine is restarted, thus allowing smooth startup of the engine.

With this chain tensioner 1, since the external thread 22 used to the mount the tensioner to the engine cover 11 is directly formed on the outer periphery of the cylinder 9, no bolts are necessary to mount the chain tensioner to the engine cover. Thus, compared to a conventional chain tensioner having a flange on the outer periphery of the cylinder 9 and adapted to be fixed to the outer surface of the engine cover 11 by means of a plurality of bolts, the chain tensioner according to the present invention can be easily mounted to the engine cover 11.

With this chain tensioner 1, since the external thread 22 on the outer periphery of the cylinder 1 is formed by casting, compared to the case where the external thread 22 is formed using a thread-cutting die or a lathe, the external thread 22 can be formed at a much lower cost.

With this chain tensioner 1, aluminum die casting is carried out with the abutment surfaces 37a of dies 37 located on the two chamfers 36. Thus, no burrs due to casting are produced from the external thread 22, which prevents deterioration in quality of the external thread 22 due to burrs produced during casting.

The cylindrical surface 23 on the outer periphery of the cylinder 9 may be subjected to finish treatment, but as shown in the above embodiment, the cylindrical surface may be left as a cast surface without being subjected to finish treatment, thereby reducing the machining cost.

If the cylindrical surface 23 on the outer periphery of the cylinder 9 is left as a cast surface, since it is difficult to form such a cast surface with high precision, there is the possibility that the cylinder 9 may interfere with the inner periphery of the tensioner mounting hole 12, thus making it impossible to mount the tensioner to the engine cover 11. But with the chain tensioner 1 of the above embodiment, since the O-ring 35 is provided for sealing the gap between the cylindrical surfaces 27 and 23, even if the gap between the cylindrical surfaces 27 and 23 is large, it is possible to minimize the consumption of engine oil. Thus, it is possible to prevent interference of the cylinder 9 with the inner periphery of the tensioner mounting hole 12 by increasing the gap between the cylindrical surfaces 27 and 23.

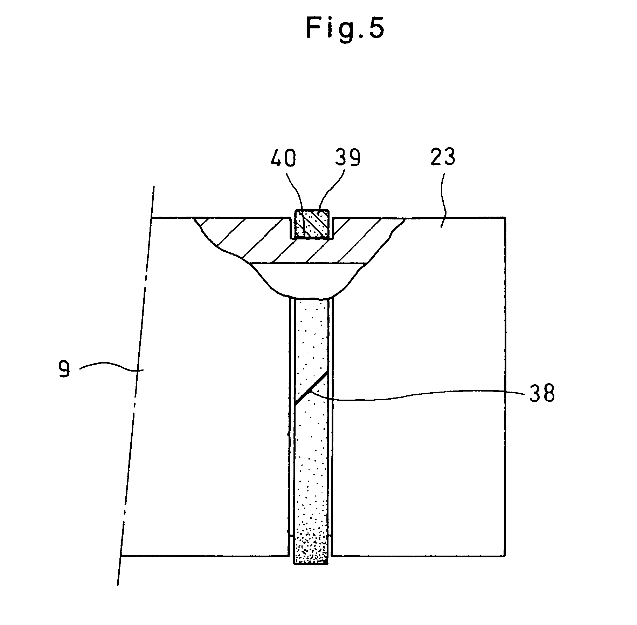

In the embodiment, the seal member sealing the gap between the cylindrical surfaces 27 and 23 is an O-ring 35. But instead, as shown in Fig. 5, a seal ring 39 having circumferentially separable abutments 38 may be fitted in a ring groove 40 formed in the cylindrical surface 23 on the outer periphery of the cylinder 9. The seal ring 39 may be made of a fluororesin (such as PTFE).

The chain tensioner of the above embodiment is a screw type chain tensioner which includes the screw rod 16 to prevent the plunger 10 from being pushed into the cylinder while the engine is stopped. But the concept of the present invention is equally applicable to a ring type chain tensioner in which, instead of the screw rod, a register ring is fitted in a groove formed in the inner periphery of the cylinder near the open end of the cylinder and elastically pressed against the outer periphery of the plunger, and in which by engaging the register ring in one of a plurality of circumferential grooves formed in the outer periphery of the plunger so as to be axially spaced apart from each other, the plunger is prevented from being pushed into the cylinder.

## Claims

1. A chain tensioner comprising a cylindrical cylinder (9) having an open end and a closed end, and inserted in and fixed in position in a tensioner mounting hole (12) formed in an engine cover (11) with its open end disposed inside the engine cover, a plunger (10) axially slidably inserted in the cylinder (9), a return spring (18) biasing the plunger (10) in a direction to protrude from the cylinder (9), wherein the cylinder (9) is formed with an oil supply passage (29) through which engine oil supplied from an oil hole (28) opening to the inner periphery of the tensioner mounting hole (12) is configured to be supplied into a pressure chamber (14) defined by the cylinder (9) and the plunger (10), and a check valve (30) provided at the end of the oil supply passage (29) on the side of the pressure chamber (14) that permits only the flow of engine oil from the oil supply passage (29) into the pressure chamber (14), wherein
an external thread (22) is formed on the outer periphery of the cylinder (9) which is adapted to be brought into threaded engagement with an internal thread (24) formed on the inner periphery of the tensioner mounting hole (12),
**characterized in that**
the surface of the external thread (22) is a cast surface, and two chamfers (36) are formed on the outer periphery of the cylinder (9) that circumferentially split the external thread (22).

2. The chain tensioner of claim 1 wherein the distance between the two chamfers (36) is smaller than the root diameter of the external thread (22).

3. The chain tensioner of claims 1 or 2 wherein a cylindrical surface (23) is formed on the outer periphery of the cylinder (9) so as to be fitted in a cylindrical surface (27) formed on the inner periphery of the tensioner mounting hole (12) with a gap left therebetween, said cylindrical surface (23) of the cylinder (9) being located nearer to the open end of the cylinder (9) than is the external thread (22), and comprising a cast surface.

4. The chain tensioner of claim 3 further comprising a seal member (35, 39) for sealing the gap between the cylindrical surface (27) on the inner periphery of the tensioner mounting hole (12) and the cylindrical surface (23) on the outer periphery of the cylinder (9) at a position nearer to the open end of the cylinder (9) than is the oil supply passage (29).

5. The chain tensioner of claim 4 wherein said seal member (35, 39) is an O-ring (35) fitted in a ring groove (34) formed in the cylindrical surface (23) on the outer periphery of the cylinder (9).

6. The chain tensioner of claim 4 wherein said seal member (35, 39) is a seal ring (39) having circumferentially separable abutments (38) and fitted in a ring groove (40) formed in the cylindrical surface (23) on the outer periphery of the cylinder (9).

7. The chain tensioner of claim 6 wherein said seal ring (39) is made of a fluororesin.

8. The chain tensioner of any of claims 1 to 7 wherein said cylinder (9) is an aluminum die cast product.

## Patentansprüche

1. Kettenspanner, aufweisend einen zylindrischen Zylinder (9), der ein offenes Ende und ein geschlossenes Ende hat, und eingesetzt und befestigt ist in einer Position in einer Spanner- Montagebohrung (12), gebildet in einer Motorabdeckung (11), mit seinem offenen Ende angeordnet innerhalb der Motorabdeckung, einen Kolben (10), axial gleitbar in den Zylinder (9) eingesetzt, einer Rückholfeder (18), die den Kolben (10) in einer Richtung vorspannt, um von dem Zylinder (9) vorzuspringen, wobei der Zylinder (9) mit einem Ölzuführungskanal (29) gebildet ist, durch den Motoröl, zugeführt aus einer Ölbohrung (28), die sich in den Innenumfang der Spanner- Montagebohrung (12) öffnet, konfiguriert ist, zugeführt zu werden in eine Druckkammer (14), gebildet durch den Zylinder (9)und den Kolben (10) , und ein Rückschlagsventil (30) vorgesehen an dem Ende des Ölzuführungskanals (29) auf der Seite der Druckkammer (14), das nur das Fließen des Motoröls aus dem Ölzuführungskanal (29) in die Druckkammer (14) gestattet, wobei
ein Außengewinde (22) an dem Außenumfang des Zylinders (9) gebildet ist, das vorgesehen ist, um in Schraubeingriff mit einem Innengewinde (24), gebildet an dem Innenumfang der Spanner- Montagebohrung (12), in Eingriff zu kommen,
**dadurch gekennzeichnet, dass**
die Oberfläche des Außengewindes (22) eine Gußoberfläche ist und zwei Abschrägungen (36) an dem Außenumfang des Zylinders (9) gebildet sind, die in Umfangsrichtung das Außengewinde (22) teilen.

2. Kettenspanner nach Anspruch 1, wobei der Abstand zwischen den zwei Abschrägungen (36) kleiner als der Kerndurchmesser des Außengewindes (22) ist.

3. Kettenspanner nach Anspruch 1 oder 2, wobei eine zylindrische Oberfläche (23) an dem Außenumfang des Zylinders (9) gebildet ist, um eingesetzt zu werden in eine zylindrische Oberfläche (27), gebildet auf dem Innenumfang der Spanner-Montagebohrung (12) mit einem dazwischen gelassenen Spalt, wobei die zylindrische Oberfläche (23) des Zylinders (9) näher an dem offenen Ende des Zylinders (9) als das Außengewinde (22) angeordnet ist und eine Gussoberfläche aufweist.

4. Kettenspanner nach Anspruch 3, außerdem aufweisend ein Dichtungsteil (35, 39) zum Abdichten des Spalts zwischen der zylindrische Oberfläche (27) an dem Innenumfang der Spanner- Montagebohrung (12) und der zylindrischen Oberfläche (27) an dem Außenumfang des Zylinders (9) an einer Position näher zu dem offenen Ende des Zylinders (9) als der Ölzuführungskanal (29).

5. Kettenspanner nach Anspruch 4, wobei das Dichtungsteil (35, 39) ein O- Ring (35) ist, eingesetzt in eine Ringnut (34), gebildet in der zylindrischen Oberfläche (27) an dem Außenumfang des Zylinders (9).

6. Kettenspanner nach Anspruch 4, wobei das Dichtungsteil (35, 39) ein Dichtungsring (39) ist, der in Umfangsrichtung trennbare Anlageflächen (38) hat und eingesetzt ist in eine Ringnut (40), gebildet in der zylindrischen Oberfläche (27) an dem Außenumfang des Zylinders (9).

7. Kettenspanner nach Anspruch 6, wobei der Dichtungsring (39) aus einem Fluor-Kunstharz hergestellt ist.

8. Kettenspanner nach einem der Ansprüche 1 bis 7, wobei der Zylinder (9) ein Aluminium- Druckgusserzeugnis ist.

## Revendications

1. Tendeur de chaîne comprenant un cylindre cylindrique (9) qui présente une extrémité ouverte et une extrémité fermée et qui est inséré et fixé en position dans un trou de montage de tendeur (12) formé dans un couvercle de moteur (11), avec son extrémité ouverte disposée à l'intérieur de celui-ci, un piston (10) inséré dans le cylindre (9) pour pouvoir coulisser axialement, un ressort de rappel (18) qui contraint le piston (10) dans une direction pour le faire dépasser du cylindre (9), étant précisé que le cylindre (9) est pourvu d'un passage d'amenée d'huile (29) par lequel de l'huile pour moteur amenée à partir d'un trou d'huile (28) qui débouche sur la périphérie intérieure du trou de montage de tendeur (12) est conçue pour être amenée dans une chambre de pression (14) définie par le cylindre (9) et le piston (10), et une soupape antiretour (30) qui est prévue à l'extrémité du passage d'amenée d'huile (29) du côté de la chambre de pression (14), et qui ne permet l'écoulement de l'huile pour moteur que du passage d'amenée d'huile (29) vers la chambre de pression (14), étant précisé qu'un filetage extérieur (22) est formé sur la périphérie extérieure du cylindre (9) et est apte à être mis en contact par filetage avec un filetage intérieur (24) formé sur la périphérie intérieure du trou de montage de tendeur (12),
**caractérisé en ce que** la surface du filetage extérieur (22) est une surface moulée, et deux chanfreins (36) sont formés sur la périphérie extérieure du cylindre (9) et coupent le filetage extérieur (22) sur sa circonférence.

2. Tendeur de chaîne selon la revendication 1, étant précisé que la distance entre les deux chanfreins (36) est plus petite que le diamètre intérieur du filetage extérieur (22).

3. Tendeur de chaîne selon les revendications 1 ou 2, étant précisé qu'une surface cylindrique (23) est formée sur la périphérie extérieure du cylindre (9) de manière à être montée dans une surface cylindrique (27) formée sur la périphérie intérieure du trou de montage de tendeur (12), avec un espace laissé entre les deux, la surface cylindrique (23) du cylindre (9) étant plus proche de l'extrémité ouverte du cylindre (9) que le filetage extérieur (22), et comprenant une surface moulée.

4. Tendeur de chaîne selon la revendication 3, comprenant par ailleurs un élément d'étanchéité (35, 39) pour l'étanchéité de l'espace entre la surface cylindrique (27) sur la périphérie intérieure du trou de montage de tendeur (12), et la surface cylindrique (23) sur la périphérie extérieure du cylindre (9), à un endroit plus proche de l'extrémité ouverte du cylindre (9) que le passage d'amenée d'huile (29).

5. Tendeur de chaîne selon la revendication 4, étant précisé que l'élément d'étanchéité (35, 39) est constitué par un joint torique (35) monté dans une rainure annulaire (34) formée dans la surface cylindrique (23) sur la périphérie extérieure du cylindre (9).

6. Tendeur de chaîne selon la revendication 4, étant précisé que l'élément d'étanchéité (35, 39) est constitué par une bague d'étanchéité (39) qui présente des butées (38) aptes à être séparées sur la circonférence et qui est monté dans une rainure annulaire (40) formée dans la surface cylindrique (23) sur la périphérie extérieure du cylindre (9).

7. Tendeur de chaîne selon la revendication 6, étant précisé que la bague d'étanchéité (39) se compose de résine fluorée.

8. Tendeur de chaîne selon l'une quelconque des revendications 1 à 7, étant précisé que le cylindre (9) est constitué par un produit moulé sous pression en aluminium.
